# EUROPÄISCHE PATENTSCHRIFT

(11) **EP 1 422 993 B1**
(45) Veröffentlichungstag und Bekanntmachung des Hinweises auf die Patenterteilung: **13.02.2008**
(21) Anmeldenummer: 02767444.9
(22) Anmeldetag: 28.08.2002
(51) Int. Cl.: A01G 9/02

(54) **PFLANZTOPF AUS TIEFGEZOGENEM KUNSTSTOFF**
PLANT POT MADE FROM DEEP-DRAWN PLASTIC
POT DE FLEUR EN MATIERE PLASTIQUE EMBOUTIE

(30) Priorität: 06.09.2001 DE 20114785 U
(43) Veröffentlichungstag der Anmeldung: 02.06.2004
(73) Patentinhaber: Pöppelmann Holding GmbH & Co. KG., 49393 Lohne (DE)
(72) Erfinder: SIEVERDING, Alfons, 49393 Lohne-Brockdorf (DE)
(74) Vertreter: Bünemann, Egon
(86) Internationale Anmeldenummer: PCT/EP2002/009566
(87) Internationale Veröffentlichungsnummer: WO 2003/022033

(56) Entgegenhaltungen:
- EP-A- 0 065 108
- EP-A- 1 092 343
- GB-A- 859 964
- US-A- 3 896 587
- US-A- 5 761 848
- US-A- 6 134 832

## Beschreibung

Die Erfindung betrifft einen Pflanztopf aus tiefgezogenem Kunststoff nach dem Oberbegriff des Anspruchs 1.

Ein solcher Pflanztopf ist aus EP-A-0 065 108 bekannt.

Bei stapelbaren Töpfen oder Bechern wird häufig eine koaxiale Stapelanordnung mit genau definiertem Stapelabstand gefordert, um vorgegebene Verpakkungsverhältnisse zu erzielen, ein Verklemmen der Töpfe untereinander zu vermeiden und ggf. ein maschinelles Entstapeln zu ermöglichen. Hierzu ist es zweckmäßig, umlaufende Simse als Auflageflächen im Bereich der Wandung bzw. im Bereich des oberen Randes vorzusehen, wobei der obere Rand selbst einen solchen "Sims" bilden kann. Zwei ineinander gestapelte Töpfe werden dann insbesondere in der (axialen) Höhe gegeneinander definiert festgelegt, ggf. auch zentriert und nicht etwa durch das Gewicht hoher Stapel oder durch äußere Einwirkung leicht ineinandergeschoben und verkeilt.

Zwei in diesem Sinne zusammenpassende Simse als im wesentlichen horizontal nach oben bzw. nach unten weisende Flächen, die sich in der Draufsicht überlappen, sind allerdings bei einem tiefbezogenen Topf nicht einfach zu realisieren, da sie einen Z-förmigen Wandverlauf verlangen, bei dem die Simse durch einen zwischenliegenden Stützbereich verbunden sind, der entgegen der generellen Konizität des Topfes konisch verläuft und bei der Endformung eine Hinterschneidung bildet.

Der beim Formgebungsvorgang innenseitig gegen eine Hohlform angelegte Topf ist aus dieser Form nicht ohne weiteres herauszubringen, vielmehr wird er druckknopfartig in der Form gehalten und muß unter Überwindung dieser Hinterschneidung ausgebracht werden. Dies ist nur in begrenztem Umfang möglich. Bei runden Pflanztöpfen etwa mit einem Topfdurchmesser zwischen 8 und 20 cm und unter Verwendung eines Polypropylen-Materials wird man Hinterschneidungen üblicherweise nur in einem Bereich von 0,5 und 1 mm oder jedenfalls von weniger als 1 Prozent des Topfdurchmessers vorsehen. Dementsprechend ist auch die ringförmige Aufstützfläche ineinandergestapelter Töpfe beschränkt. Das Risiko, daß sich die Töpfe im Stapel unter Eigenlast oder Druck von außen verformen und zumindest an Teilen ihres Umfangs ineinanderschieben, ist erheblich. Entsprechende Topfstapel lassen sich von Hand nur mit Mühe und maschinell in der Regel gar nicht entstapeln. Gleichzeitig entsteht durch die Verformung im Stapel eine Gefahr von Überlastungen und Beschädigungen des Materials wie auch, etwa bei längerzeitiger Lagerung, die Gefahr einer Dauerverformung.

Aufgabe der Erfindung ist es dementsprechend, einen Pflanztopf in stapelbarer Form so zu gestalten, daß er sich in produktionsgerechter schneller Entformung nach dem Tiefziehen ausbringen läßt und gleichwohl beim Stapeln, beim Transport und auch bei der Weiterverwendung aus dem Stapel heraus, insbesondere auch beim maschinellen Entstapeln eine belastbare, präzise distanzierte Stapelstellung einnimmt.

Gemäß der Erfindung wird diese Aufgabe von einem herkömmlichen Pflanztopf nach dem Oberbegriff des Anspruchs 1 ausgehend mit den kennzeichnenden Merkmalen des Anspruchs 1 gelöst.

Der entscheidende Schritt, aus den einander widersprechenden Bedingungen für eine gute Entformbarkeit und eine gute Stapelbarkeit herauszukommen, liegt in der wellenförmigen Gestaltung des Stützbereichs zumindest einenends im Anschluß an einen der beiden Simse. Diese wellenförmige Gestaltung kann in sehr unterschiedlicher Form ausgeführt sein. Es kommen gerundete S- oder Sinus-Bögen genauso in Betracht wie Rechteck-Wellenformen, Sägezahnformen oder Zick-Zack-Formen. Die nach außen vorstehenden Wellenbereiche müssen nicht etwa spiegelbildlich zu den nach innen einspringenden Wellenbereichen geformt sein - einerseits schmal und andererseits breite Ausformungen und auch wechselnde oder unregelmäßige Abmessungen sind verwendbar.

Wesentlich ist, daß die glatte Randkontur durch die Wellenform aufgelöst und damit nachgiebig gestaltet ist. Damit kann bei dem Z-förmigen Bereich aus den Simsen und dem zwischenliegenden Stützbereich zumindest teilweise eine Verformbarkeit und somit auch eine Entformbarkeit bei größerem Hinterschnitt und deshalb größerer Auflage der Simse aufeinander erzielt werden.

Grundsätzlich kann der Stützbereich im Ganzen wellenförmig gestaltet werden, es kann aber auch schon eine Wellenform im Anschluß an einen der beiden Simse ausreichen, die Entformbarkeit sicherzustellen. Soweit einer der beiden Simse in Form des oberen, in der Regel besonders steifen Topfrandes realisiert ist, wird der Anschluß an den unteren Sims in erster Linie in Betracht kommen, die gewünschte Nachgiebigkeit zu schaffen. Soweit allerdings beide Simse in einem Bereich sehr viel geringerer Wandstärke angeordnet sind, kann auch der obere Sims auf eine entsprechende Nachgiebigkeit mit einer Wellenform des anschließenden Stützbereichs ausgelegt werden, wobei dieser beim Entformen dann nicht gestaucht, sondern gedehnt wird.

Die erfindungsgemäß angestrebte Nachgiebigkeit des Topfes im Bereich der Simse ist nicht nur für Rundtöpfe, also Töpfe mit kreisringsförmigen Rand von Bedeutung, sie ist in gleicher Weise bei Rechtecktöpfen von Vorteil und würde bei Sonderformen, etwa bei ovalen, sechs- oder achteckigen Töpfen ebenso wichtig sein. Für die Nachgiebigkeit des Topfes in seiner Querschnittsebene ist es von Bedeutung, die großen, glatten Wandstrukturen aufzulösen und dabei eine über die Elastizität des Materials gegenüber reiner Druck- oder Zugbelastung hinausgehende Formelastizität einzuarbeiten. Dazu ist es zweckmäßig, daß die Wellenform Teilungen in Umfangsrichtung bildet, die kleiner als die Abmessungen des Stützbereichs sind oder jedenfalls nicht wesentlich über diese Abmessungen hinausgehen.

Ein Ausführungsbeispiel der Erfindung ist in der Zeichnung dargestellt und wird nachfolgend näher beschrieben. In der Zeichnung zeigen:
- Fig. 1:: Seitenansicht eines Pflanztopfs, auf der linken Seite schnittbildlich dargestellt
- Fig. 2:: Teilansicht des Pflanztopfs nach Fig. 1, schräg von unten gesehen
- Fig. 3:: Schnitt nach Linie III-III in Fig. 1 und
- Fig. 4:: vergrößerte Ansicht des schnittbildlichen Bereichs IV in Fig. 1 in Zuordnung mit einem zweiten Pflanztopf in Stapelanordnung.

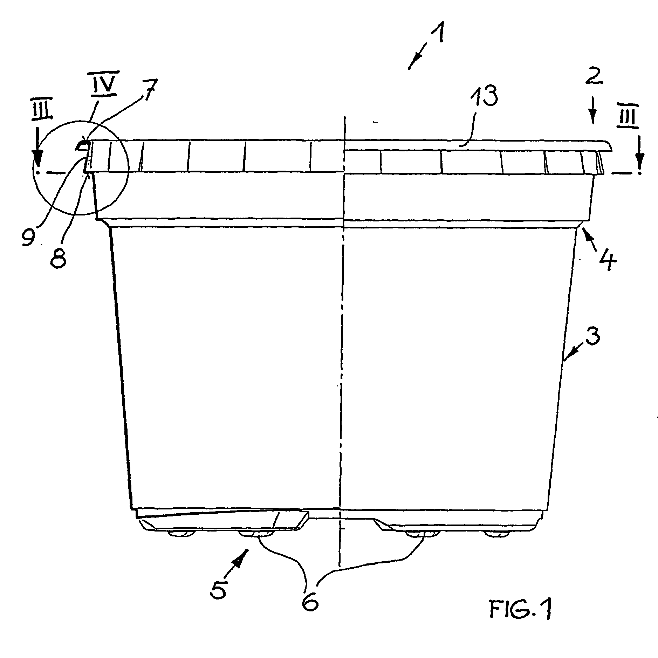

Ein in Fig. 1 insgesamt mit 1 bezeichneter Pflanztopf ist als Kunststoff-Tiefziehteil aus einer flachen Folie geformt und gestanzt. Formgebungsbedingt hat er dementsprechend eine Becherform mit einer einfachen, durchgängigen, unverzweigten Wandung, die oberseitig einen Randbereich 2 mit einer generelle konischen Topfwand 3, in die insbesondere aus Versteifungsgründen auch eine Stufe 4 eingezogen ist und einem Boden 5, der zur Versteifung und zur Beeinflussung der Topfentwässerung mit einer hier nicht genauer dargestellten Profilierung versehen ist und über napfförmige Fußnoppen 6 von einer jeweiligen Aufstellfläche distanziert wird. Überdies weist der Pflanztopf 1 im Bodenbereich Löcher (nicht dargestellt) zur Be- und Entwässerung auf. Der so geformte Pflanztopf 1 hat eine generell sich nach unten verjüngende Form, was sowohl dem Erfordernis einer guten Entformbarkeit nach dem Tiefziehen aus einer Hohlform entspricht, an die sich der Formling innenseitig anlehnt, wie auch dem Erfordernis einer Stapelbarkeit durch ein raumsparendes Ineinandersetzen der Töpfe, die dabei mit einem geringen vorgegebenen Spiel zentriert werden, so daß sie beim Anwender, etwa im Erwerbsgartenbau, präzise mit maschinellen Mitteln entstapelt werden können.

Allerdings ist beim Ineinanderstapeln nicht nur eine gegenseitige Zentrierung und koaxiale Ausrichtung der Töpfe im Stapel vorzusehen, sondern auch ein definierter Stapelabstand der Töpfe voneinander. Es gilt auch zu vermeiden, daß die Töpfe sich ineinander verkellen und nur schwer voneinander zu lösen sind. Hierzu dient einem Querschnitt Z-förmig ausgebildeter Randbereich 2, wie er in Fig. 1 als Detail IV eingekreist, wie er bei tiefgezogenen Pflanztöpfen grundsätzlich schon bisher vorgesehen wurde. Dabei wird ein oberer Sims 7 zum Aufsetzen eines weiteren Topfs und ein unterer Sims 8 vorgesehen, der dem oberen Sims eines darunter angeordneten Topfes aufliegt. Die beiden Simse 7 und 8 müssen also für eine tragende stabile Stapelanordnung einander in der Draufsicht überdecken mit der Folge, daß die Wandung dazwischen, die beim Stapeln einen Stützbereich 9 darstellt, nach oben hin eingezogen auszubilden ist. Dieser Stützbereich, der also zum oberen Sims 7 hin eine geringere Weite als zum unteren Sims 8 hin aufweist, stellt ein Problem für die Entformbarkeit nach dem Tiefziehen aus einer außenseitig anliegenden Tiefziehform dar, aus der der Topf in axialer Richtung hin auszustoßen ist. Das Ausstoßen setzt voraus, daß die frisch geformte Topfform zwar nicht freigängig aber jedenfalls unter Nutzung einer material- und formbedingten Nachgiebigkeit herausbewegt werden kann. Dies ist nur begrenzt möglich, wobei auch eine Empfindlichkeit des noch nicht erstarrten Topf-Formlings zu berücksichtigen ist.

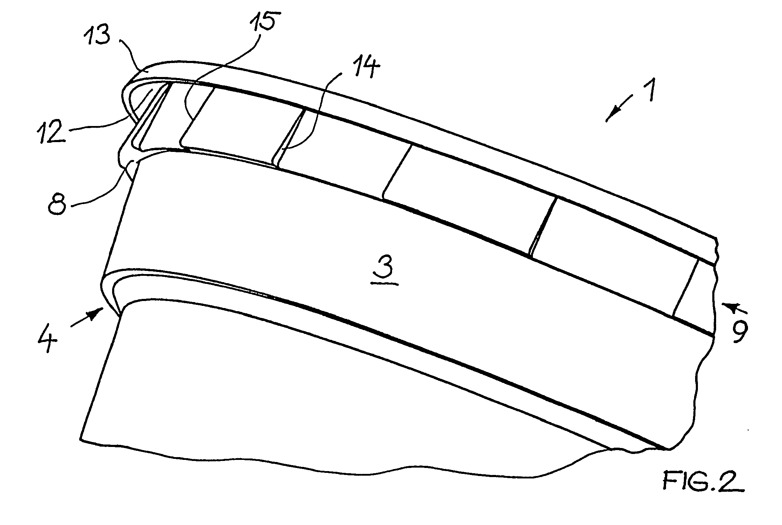

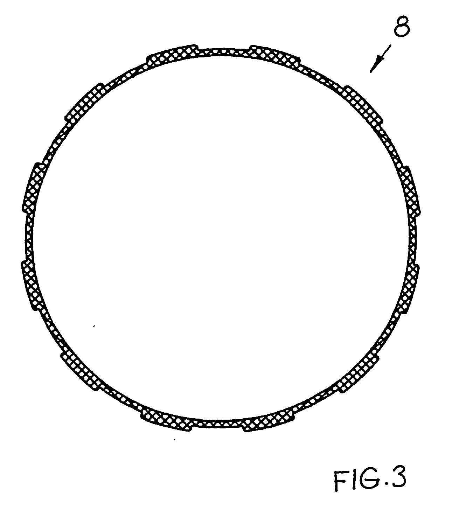

Wie nun insbesondere Fig. 1 und 2 veranschaulichen, weist der umlaufende Stützrand 9 eine besondere Ausformung auf. Er ist, in Umfangsrichtung betrachtet, rechteck-wellenförmig verformt. Die Fig. 3 zeigt, daß dementsprechend auch der untere Sims 8 mit seiner in den Stützbereich 9 übergehenden Außenkontur, die entsprechende Wellenform aufweist. Damit läßt sich der Zielkonflikt zwischen einer möglichst weiten Überdeckung der Simse 7 und 8 für ein verläßliches und stabiles Stapeln einerseits und einer guten Entformbarkeit andererseits lösen. Die Wellenform des Stützbereichs 9 weicht die Querschnittssteifigkeit des Stützrandes auf, wie sie einer glatt durchlaufenden, hier der kreisrunden Form folgende, Linie zuzuschreiben ist. Die Welligkeit des Stützrandes schafft eine Wandverlängerung und -verschmälerung, insbesondere aber auch Auslenkungen der Wand aus der ringförmig anzunehmenden Drucklinie beim Entformen. Für die möglichst breite Auflage der ineinander gestapelten Töpfe zwischen den jeweiligen Simsen 7 bzw. 8 ist eine Wellenform der Stützbereiche bzw. eine wellenförmig konturierte Simsform (Fig. 3) gleichfalls vorteilhaft, da es im wesentlichen auf den Umriß ankommt. Sowohl in dieser Hinsicht wie auch hinsichtlich der Nachgiebigkeit des Stützbereichs 9 und des unteren Simses 8 beim Entformen ist es allerdings von Interesse, die Teilungen des Stützbereichs, die sich aus der Wellenform ergeben, nicht wesentlich gröber als die Abmessungen des Stützbereiches zu gestalten, damit sowohl die Verformungen beim Herausdrücken des Topf-Rohlings aus der Tiefziehform wie auch die Belastungen beim Stapeln, auf kurzem Wege und mit geringen Verformungen in die übrige Schalenform eingehen.

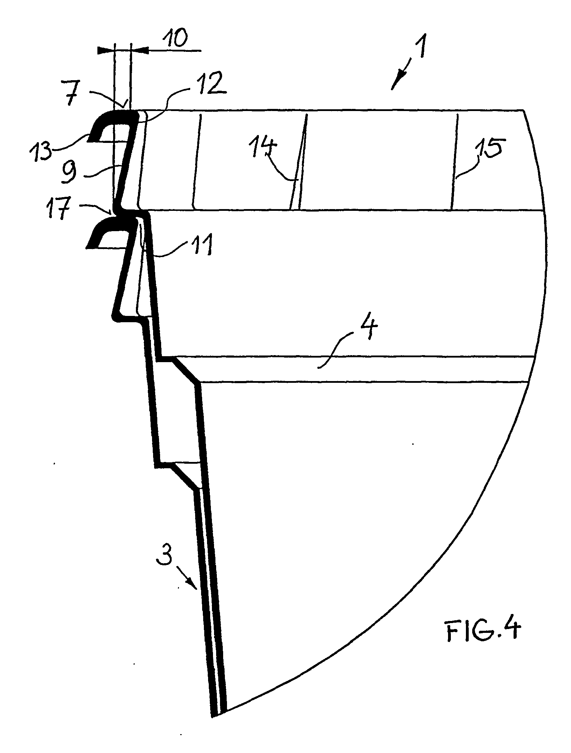

Die Stapelsituation zwei ineinandergesetzten Pflanztöpfen wird anhand der schnittbildlichen Darstellung gemäß Fig. 4 besonders deutlich. Durch einen Maßpfeil 10 wird das Hinterschneidungsmaß als Radiusdifferenz am Stützbereich 9 auf der Außenseite zwischen dessen Übergang in den unteren Sims 8 und den oberen Sims 7 verdeutlicht. Das Hinterschneidungsmaß 10 zeigt einerseits das Maß an, um das der untere Stützbereich 9 und der untere Sims 8 bei einem Entformen zurückgedrückt werden müssen. Zum anderen ergibt sich aus diesem Maß 10, zuzüglich der Wandstärke des Stützbereichs 9, die Überdekkung der Simse, hier etwa gegenüber einem oberen Sims 17 eines (gleichen) nachfolgenden Topfes im Stapel, die als ringförmige Auflagefläche zur Verfügung steht. Von Interesse ist dabei auch, daß die Töpfe gegeneinander sich möglichst wenig zentrisch verschieben können und nicht etwa an einem Umfangsbereich stärker überdecken und auf der gegenüberliegenden Seite ineinander rutschen. Dementsprechend wird regelmäßig auch vorgesehen, daß die Töpfe im Stapel gegeneinander wenig Spiel aufweisen, wobei vorzugsweise in der Ebene des oberen Simses 7 ein Ring-Spiel 11 (Fig. 4) von nur 0,1 mm vorgegeben wird.

Mit erfindungsgemäßen Wellen in Form des Stützbereichs läßt sich ein wichtiges Problem bei tiefgezogenen Pflanztöpfen ausräumen, die sonst wegen einer Reihe von wesentlichen Vorteilen hinsichtlich Gesamtgewicht, Fertigungskosten oder Festigkeit gegenüber gespritzten Kunststofftöpfen an Bedeutung gewinnen, die im allgemeinen in der Gestaltung besonderer Formen etwa zur Ausbildung von Stapelschultern, freier vorgegeben werden können. Es kommt bei der Wellenform nicht auf eine bestimmte Gestaltung an, so lange die Wellenform des Stützbereichs und die entsprechende Konturierung des hauptsächlich zu verformenden Simses eine ausreichende Nachgiebigkeit erhalten. Bei der Ausrichtung der Wellenform ist eine vertikale Profilierung vorzuziehen, wie sie auch bei den dargestellten Rechteckswellen mit von oben nach unten laufenden Kanten zu sehen ist. Die Nachgiebigkeit des Stützbereichs soll nur in Umfangsrichtung vergrößert werden, während der Stützbereich bei der Distanzierung der Simse 7 und 8 nicht aufgeweicht werden soll. Die vertikalen Versatzflächen 14, 15 der Rechtseck-Wellenform oder "Facetten" wirken sogar versteifend. Diese Versatzflächen 14, 15 laufen keilförmig nach oben aus, so daß der Sims 8 zwar die in Fig. 2 dargestellte Konturierung erhält, der Sims 7 aber eine für die Handhabung und auch für die Zentrierung der Töpfe untereinander zweckmäßig glatt durchlaufende Innenkanten aufweist. Im vorliegenden Fall ist der zu verformende Sims naturgemäß der untere Sims 7, da der obere Sims gleichzeitig Teil eines oberen Flanschrandes 12 mit umfangseitig nach unten zurückgebogener Kante 13 ist, der vom Tiefziehvorgang her nicht nur durch seine Größe und Form besonders steif ist, sondern auch die größte Wandstärke behält. Es versteht sich natürlich in anderen Fällen, daß auch der obere Sims 7 nachgiebig erweiterbarausgestaltet sein könnte oder daß beide Simse 7,8 mitsamt dem Stützbereich erheblich Beiträge zur Entformbarkeit beitragen. Dies würde naheliegen, wenn die zum Stapeln vorzusehenden Simse vom oberen Rand weg hinein nach unten in die Wandung verlegt wären, was grundsätzlich möglich, für den Zugang eines maschinellen Stapel-Werkzeugs aber regelmäßig nicht gewünscht ist.

## Patentansprüche

1. Pflanztopf (1) aus tiefgezogenem Kunststoff in zumindest leicht konischer, stapelbarer Grundform mit einem steifen oberen flanschartigen Rand (2) mit der größten Wandstärke des Pflanztopfes, einer generell konischen Topfwand (3) und einem zur Versteifung und Entwässerung profilierten Aufstell-Boden (5), wobei ein Stapelabstand durch zwei Simse (7;8) festgelegt wird, die durch einen zwischenliegenden Stützbereich (9) miteinander verbunden sind, der entgegen der für die Stapelbarkeit vorzusehenden Konusform zum oberen Sims (7) eine geringere Weite als zum unteren Sims (8) aufweist, wobei der flanschartige Rand (2) den oberen Sims (7) bildet, **dadurch gekennzeichnet, daß** die Pflanztöpfe im Bereich der Simse mit einem geringen Ring-Spiel (11) für das Ineinanderstapeln ausgelegt sind, wobei die Simse gegeneinander eine ringförmig umlaufende Auflagefläche bilden, und daß der Stützbereich (9) im Querschnitt zumindest einenends im Anschluß an einen der beiden Simse (7;8) wellenförmig gestaltet ist, wobei der Stützbereich (9) innerhalb der Wellenform jeweils vorwiegend vertikal verlaufende Fronten oder Linien ausbildet.

2. Pflanztopf nach Anspruch 1, **dadurch gekennzeichnet, daß** der Stützbereich (9) rechteck-wellenförmig gestaltet ist.

3. Pflanztopf nach Anspruch 1 oder 2, **dadurch gekennzeichnet, daß** die Wellenform Teilungen in Umfangsrichtung bildet, die nicht wesentlich über den Abmessungen des Stützbereichs (9) liegen.

4. Pflanztopf nach einem der Ansprüche 1 bis 3, **dadurch gekennzeichnet, daß** die Wellenform zumindest in Abschwächungen bis zum Übergang in den anderen Sims (7) fortgesetzt ist.

5. Pflanztopf nach einem der Ansprüche 1 bis 4, **dadurch gekennzeichnet, daß** der mit einer der Wellenform des Stützbereichs entsprechenden Kontor versehene untere Sims (8) radial zumindest den größten Teil der Breite des oberen Simses (7) überdeckt.

6. Pflanztopf nach einem der Ansprüche 1 bis 5, **dadurch gekennzeichnet, daß** der flanschartige Rand des Topfes (1) außen nach unten rückgebogen ist.

## Claims

1. Plant pot (1) made from deep-drawn plastics material, of an at least slightly conical, stackable basic shape, having a stiff upper flange-like edge (2) at which the wall thickness of the plant pot is greatest, having a generally conical wall (3) to the pot, and having a bottom (5) for standing-on which is profiled for the purposes of stiffening and drainage, a stacked spacing being defined by two lips (7, 8) which are connected together by an intervening supporting region (9) which, in contrast to the conical shape which has to be provided for stackability, is of a smaller width at the upper lip (7) than at the lower lip (8), the upper lip (7) being formed by the flange-like edge (2), **characterised in that** the plant pots are designed to have, in the region of the lips, a small annular clearance (11) for stacking them into one another, the lips forming in relation to one another an area for support which extends round in a ring, and **in that**, at least at one end, the supporting region (9) is formed, in cross-section, to be of a corrugated configuration which connects up with one of the two lips (7, 8), with the supporting region (9) producing, within the corrugated configuration, fronts or lines which each extend predominantly vertically.

2. Plant pot according to claim 1, **characterised in that** the supporting region (9) is formed to be of a square-cornered corrugated configuration,

3. Plant pot according to claim 1 or 2, **characterised in that** the corrugated configuration produces, in the circumferential direction, divisions which are not substantially larger than the dimensions of the supporting region (9).

4. Plant pot according to one of claims 1 to 3, **characterised in that** at least in weakened portions, the corrugated configuration is continued to the transition to the other lip (7).

5. Plant pot according to one of claims 1 to 4, **characterised in that** the lower lip (8), which is given an outline corresponding to the corrugated configuration of the supporting region, covers at least the major proportion of the width of the upper lip (7).

6. Plant pot according to one of claims 1 to 5, **characterised in that** the flange-like edge of the pot (1) is folded back outwards and downwards.

## Revendications

1. Pot de fleurs (1) en matière plastique emboutie, ayant une forme de base empilable, au moins légèrement conique, avec un bord supérieur rigide en forme de bride (2) présentant la plus forte épaisseur de paroi du pot de fleurs, une paroi de pot généralement conique (3) et un fond de dépôt (5) profilé pour le renforcement et le drainage, dans lequel un écart d'empilage est fixé par deux moulures (7; 8) qui sont reliées l'une à l'autre par une zone de support intermédiaire (9) qui, contrairement à la forme conique à prévoir pour permettre l'empilage, présente à la moulure supérieure (7) une largeur plus petite qu'à la moulure inférieure (8), dans lequel le bord en forme de bride (2) forme la moulure supérieure (7), **caractérisé en ce que** les pots de fleurs sont conçus, dans la région des moulures, avec un faible jeu annulaire (11) pour l'empilage l'un dans l'autre, dans lequel les moulures forment l'une par rapport à l'autre une surface d'appui périphérique annulaire, et **en ce que** la zone de support (9) est configurée en forme d'onde, en section transversale au moins à une extrémité se raccordant à une des deux moulures (7; 8), dans lequel la zone de support (9) forme à l'intérieur de la forme d'onde chaque fois des fronts ou des lignes orientés principalement en direction verticale.

2. Pot de fleurs selon la revendication 1, **caractérisé en ce que** la zone de support (9) est configurée en forme d'onde rectangulaire.

3. Pot de fleurs selon la revendication 1 ou 2, **caractérisé en ce que** la forme d'onde forme des divisions dans la direction périphérique, qui ne se situent pas essentiellement au-delà des dimensions de la zone de support (9).

4. Pot de fleurs selon l'une quelconque des revendications 1 à 3, **caractérisé en ce que** la forme d'onde se poursuit au moins dans des atténuations jusqu'à la transition dans l'autre moulure (7).

5. Pot de fleurs selon l'une quelconque des revendications 1 à 4, **caractérisé en ce que** la moulure inférieure (8) pourvue d'un contour correspondant à la forme d'onde de la zone de support recouvre radialement au moins la plus grande partie de la largeur de la moulure supérieure (7).

6. Pot de fleurs selon l'une quelconque des revendications 1 à 5, **caractérisé en ce que** le bord en forme de bride du pot (1) est recourbé extérieurement vers le bas.
